(19) Europäisches Patentamt / European Patent Office / Office européen des brevets

(11) **EP 4 111 555 B1**

(12) **EUROPEAN PATENT SPECIFICATION**

(45) Date of publication and mention of the grant of the patent:
**15.04.2026 Bulletin 2026/16**

(21) Application number: **21719747.4**

(22) Date of filing: **26.02.2021**

(51) International Patent Classification (IPC):
$H01S\ 3/00^{(2006.01)}$     $H01S\ 3/13^{(2006.01)}$
$H01S\ 3/23^{(2006.01)}$

(52) Cooperative Patent Classification (CPC):
**H01S 3/0085; H01S 3/1302; H01S 3/2316; H01S 3/2375;** H01S 3/2391

(86) International application number:
**PCT/SI2021/050007**

(87) International publication number:
**WO 2021/173086 (02.09.2021 Gazette 2021/35)**

(54) **A HYBRID LASER FOR GENERATING LASER PULSES ON DEMAND WITH CONSTANT ENERGY AND A METHOD OF GENERATING SAID PULSES**

HYBRIDER LASER ZUR ERZEUGUNG VON BEDARFSGESTEUERTEN LASERIMPULSEN MIT KONSTANTER ENERGIE UND VERFAHREN ZUR ERZEUGUNG DIESER IMPULSE

LASER HYBRIDE POUR GÉNÉRER DES IMPULSIONS LASER SUR COMMANDE AVEC UNE ÉNERGIE CONSTANTE ET PROCÉDÉ DE GÉNÉRATION DESDITES IMPULSIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2020 SI 202000037**

(43) Date of publication of application:
**04.01.2023 Bulletin 2023/01**

(73) Proprietor: **Univerza v Ljubljani**
**1000 Ljubljana (SI)**

(72) Inventors:
• **PETKOVSEK, Rok**
  **1000 Ljubljana (SI)**
• **PETELIN, Jaka**
  **1000 Ljubljana (SI)**
• **CERNE, Luka**
  **1000 Ljubljana (SI)**

(74) Representative: **Patentni Biro AF d.o.o.**
**Kotnikova 32, p.p. 2706**
**1001 Ljubljana (SI)**

(56) References cited:
**WO-A1-2019/138192     US-A1- 2014 050 235**
**US-A1- 2018 309 258**

## Description

Field of the invention

The present invention belongs to the field of laser devices for generating, multiplying, modulating or changing repetition frequency using stimulated light waves, more precisely to the field of constructional details of laser devices and laser devices for controlling intensity, frequency, duration, polarization or direction of emitted rays. The invention relates to a hybrid laser for generating laser pulses on demand, said pulses having constant energy, and to a method of generating laser pulses with constant energy using the said hybrid laser.

Background of the invention and the technical problem

Today's laser processing systems and methods demonstrate the need for adaptive laser sources capable of generating laser pulses on demand. The generation of laser pulses on demand is particularly important when using high-speed scanning systems (e.g. polygon or resonant scanning systems) where high flexibility of the laser system is desirable due to the inflexible scanning speed.

Hybrid lasers are lasers that combine different geometries of amplifier media, exploiting the different advantages of each type of amplifier media. For this purpose, a combination of fibre pre-amplifiers and additional solid-state power amplifiers is often used. The first provide high efficiency and high laser beam quality, whereas the second enable achieving high peak powers of the laser pulses and high pulse energies.

One method for generating laser pulses on demand is to combine a primary laser source with at least one additional laser source that is used to generate idler pulses. The combined laser system also comprises laser amplifiers and an additional element to separate the idler pulses from the primary laser pulses. The idler pulses are used to control the amplification in all amplifiers of the laser system. Problems arise in cases where laser systems include two or more different types of amplifiers, such as one or more fibre amplifiers and one or more solid-state amplifiers. The different gain spectra of the fibre and solid-state amplifiers in combination with different spectral widths of the primary and idler pulses lead to a difference in the amplification between primary and idler pulses and thus to the occurrence of transient phenomena in laser pulse energies. As a result, the laser pulse amplitudes and pulse energies are no longer constant in pulse on demand operation, which is undesirable for laser operation and also for laser processing applications. For example, ytterbium-doped fibre amplifiers have a broad gain spectrum, resulting in the same amplification of the primary (with a broad spectrum) and idler pulses (with a narrow spectrum). On the other hand, solid-state amplifiers usually have a narrower gain spectrum, resulting in smaller amplification of the primary pulses compared to amplification of the idler pulses, which leads to transient optical phenomena, that are expressed as variations in a laser pulse energies during pulse on demand operation. This occurs because the laser does not operate in a stationary regime as a result of different gains in different type of amplifier.

For pulse on demand operation without transient optical phenomena, i.e. constant pulse energy, primary (desired) pulses with a broad spectrum and idler pulses must have the same gain in all amplification stages, especially in the case of hybrid lasers using a combination of fibre and solid-state amplifiers. The technical problem that this invention solves is therefore the design of a hybrid laser system that will allow pulses to be generated on demand with constant energy, which means that the aforementioned laser system must eliminate or prevent transient optical phenomena during the amplification of laser pulses. The invention must be suitable for integration into different laser devices and must be easily used in various laser processes where pulses on demand are desirable.

State of the art

The pulse on demand operation of the laser can be achieved in several different ways, which are already well researched and described in the literature. In the case of lasers that do not require high pulse energies or high average power at the laser output, pulses on demand can be formed simply by using a light modulator at the output of the laser amplifier. In the case of increased power, however, more advanced techniques must be used to avoid optical damage in the modulator. More demanding techniques include so-called coherent combination of laser pulses from several separate laser amplifiers. In this case, by controlling the phase of individual pulses, constructive or destructive interference of pulses at the output of the laser system and thus operation in pulse on demand regime can be achieved. Pulse on demand generation is described in more detail in the patent EP3590160.

Since the coherent pulse combination is typically very challenging, other methods are typically used to generate laser pulses on demand, in which additional idler pulses are used to control the gain of the primary pulses in the laser amplifier. The idler pulses provide a constant population inversion of the amplifier and must be separated from the primary pulses at the output of the laser amplifier, for which different techniques can be used. Existing inventions based on the use of idler pulses are thus mainly distinguished in the methods of generation of idler and primary pulses and methods of separating idler and primary pulses at the output of the laser amplifier.

The US8149886 patent describes how to operate in a pulse on demand regime using a single source to generate both idler and primary pulses and how to separate them based on different polarizations of primary and idler pulses. This solution differs from the present invention because the latter uses two or more sources to generate primary and idler pulses.

The US8717670 patent describes separation of idler and primary pulses based on light frequency conversion or based on the use of a light modulator at the amplifier output. In this patent a gain switched diode is used to generate both idler and primary laser pulses. The idler pulses are generated with a much higher repetition frequency than the primary pulses, making the peak power of the idler pulses much lower than the peak power of the primary pulses. This allows for effective separation of the idler and primary pulses by frequency conversion of light. This solution differs from the present invention because the latter does not use optical modulators at the output of the laser amplifier and because the present invention allows for the formation of primary pulses with picosecond or femtosecond duration.

Instead of a gain switched diode, a laser oscillator may also be used to form primary and idler pulses, as described in the document DE102014017568. In addition to the laser oscillator another crucial component presented in this document is an optical modulator, which allows for the modulation of optical pulses from the oscillator, and thus for the formation of primary and idler pulses. The primary pulses have the largest amplitude, whereas idler pulses have a much smaller amplitude and a much higher repetition frequency. Due to the lower amplitude and the higher repetition frequency, the idler pulses have much lower peak power than the primary pulses. Due to the lower peak power, it is again possible to separate primary and idler pulses based on frequency conversion of light. In this document an in-depth knowledge of the amplifier dynamics is required which allows for achieving different output energies of the primary pulses. Similar approaches are also described in the patent US9570877. In-depth knowledge of the amplifier dynamics is also crucial for the device described in document DE102017210272, where they use either one or two pulsed light sources to generate primary and idler pulses.

Two light sources for the generation of primary and idler pulses are also used in the device described in the patent US7885298. Like before the primary and idler pulses are also separated by frequency conversion of light. The mentioned document describes the control of pulse amplification in one type of amplifier but does not mention the combination of different types of amplifiers with different gains, which is conceptually different from the present invention. In the case of a combination of different types of amplifiers, the mere use of an additional source for the formation of idler pulses is not sufficient for successful control of pulse amplification due to the differences in the gain spectra already mentioned above.

Patent application US2018309258A1 discloses a laser system including a source, for generating a source signal, and an optical amplifier system. The laser system includes a pulse selection or variation device configured to select or vary the source signal so as to form a main signal composed of one or more light pulses. The main signal is temporally variable in terms of rhythm and/or amplitude. The laser system is configured to inject the main signal and a secondary signal into the optical amplifier system. The secondary signal is varied on the basis of the temporal variation in terms of rhythm and/or amplitude of the main signal so as to stabilize the power stored in the optical amplifier system in a time-dependent manner, and the laser system is configured to spatially separate the amplified main signal from the amplified secondary signal.

Description of the solution of the technical problem

With regards to the above-described known solutions the aim of the invention is thus to ensure additional control of the secondary light source, which generates idler laser pulses, which will enable constant gain in two different types of optical amplifiers and consequently constant energy of the desired pulses after separation from idler pulses with a suitable separator. The technical problem is solved by a hybrid laser, as described in the independent patent claim, while the dependent claims present the specific embodiment of the laser according to the invention. None of the solutions previously known to date foresees a change or adjustment of the spectrum of idler pulses in order to control laser pulse amplification.

The essence of the hybrid laser for generating pulses on demand with constant energy according to the invention is in that it controls the spectrum of idler pulses which are generated by two or more laser sources, in order to stabilize amplification of laser pulses in all laser amplifiers. The change in spectrum of the idler pulses can be achieved using different techniques. In a case where a fibre or a solid-state laser is used to generate idler pulses, the appropriate idler spectrum can be achieved using an appropriate adjustable optical band-pass filters in the laser oscillator or with appropriate adjustable reflective elements in the laser oscillator such as diffraction gratings or Bragg gratings. According to an embodiment of the present invention a laser diode is used as a source of idler pulses, where the change in the idler light spectrum can be achieved either by temperature adjustment of the laser diode or with the use of an appropriate fibre Bragg grating, which enables stabilization of the laser diode wavelength. The simplest method is to adjust the temperature of the laser diode, which the user can selectively change by appropriate control of the installed thermoelectric elements in the laser diode itself. In the preferred embodiment of the invention, the temperature of the idler source shall be set in the range between 10 and 50 °C by adjusting the current on the thermoelectric element, depending on the desired wavelength shift, since the spectrum of the idler pulses depends on the temperature of the laser source. More than a change in temperature, an appropriate adjustment of the idler wavelength is essential.

A preferred embodiment of the hybrid laser comprises at least

- a source of primary laser pulses with broad spectrum (typically broader than 2 nm),
- at least one element such as pulse picker, which allows the repetition frequency of the primary pulses to be changed, except where the source of the primary pulses itself allows pulses to be generated with different repetition frequencies or pulses on demand,
- at least two additional sources for generating idler pulses, the wavelength of which can be adjusted in a range of a few nanometres, typically from 0,5 nm to 5 nm,
- at least one element for combining primary and idler pulses,
- at least two amplifiers having different gain spectra, including at least one fibre amplifier and at least one solid-state amplifier,
- optional pulse compressor,
- pulse separator to separate primary (desired) pulses from idler pulses, and
- control electronics for switching between primary and idler pulses.

The source of the primary pulses is a laser oscillator, which can exploit either gain switching technique, q-switching technique or mode-locking for generation of laser pulses. The preferred embodiment of the invention uses a mode-locked laser oscillator for primary pulse generation, generating pulses of less than 10 ps in length at a repetition frequency above 1 MHz and an average power of about 1 mW at 1030 nm. In this case, an additional pulse picker shall be used for desired primary pulses selection and which can be used to select individual primary laser pulses, that are then amplified in the following laser amplifiers.

The pulse picker is a device that can be used to switch between individual laser pulses very fast, leaving only the selected pulses in the remaining pulse train. The pulse picker may be either an acousto-optic modulator, an electro-optic modulator, or a semiconductor optical amplifier. The preferred embodiment of the invention uses an acousto-optic modulator as a pulse picker with a response time of less than 100 ns.

The doped optical fibre and associated pumping system are considered a fibre amplifier, thus achieving the amplification of the laser pulses. As a preferred embodiment of the invention, fibre amplifiers are made up of optical fibres doped with ytterbium, but other dopants known in the field may also be used. A laser system may consist of one or more fibre amplifiers, where the exact location of the pulse picker and pulse combiner can be arbitrary as long as at least one fibre amplifier and at least one solid-state amplifier remain after the pulse combiner.

A solid-state amplifier is a doped crystal or glass in which laser pulses are not guided by an amplifier (as in the case of fibre amplifiers), preferably YAG crystal doped with ytterbium ions, pumped with diode lasers at a wavelength of about 940 nm or about 969 nm.

In the case of an ultra-short laser pulse source (e.g. mode-locked laser oscillator) as the source of the primary pulses, a laser pulse stretcher may be additionally used in front of the amplifiers. In this case, a laser pulse compressor may also be used after the last amplifier.

The number of sources for generating idler pulses is two or more. It is important that at least one source of idler pulses is spectrally shifted relative to the other and that the amplitude of pulses from this source can be adjusted. The source of the idler pulses can be a DFB laser diode, where the preferred duration of the idler pulses is about 30 ns. A preferred method of wavelength adjustment in the case of one source of the idler pulses is temperature regulation, however an appropriate fibre Bragg grating could also be used. If two or more sources of idler pulses are used, the wavelength adjustment is achieved in the same way as in the case of only one source, for at least one of the sources of idler pulses. In this case one source has the wavelength that corresponds approximately to the peak of the solid-state gain spectrum, whereas the other has a wavelength that falls outside of the solid-state gain spectrum but is still within the gain spectrum of the fibre amplifier, therefore not influencing the amplification of the laser pulses in the fibre amplifier. The operation principle in this case is as follows:

- The energy of both idler pulses must be constant and their sum must be the same as the energy of primary pulse, and
- amplitude of the idler pulses must be adjustable in order to achieve appropriate amplification in the solid-state amplifier.

It is important that both sources of idler pulses generate pulses that lie on different locations along the solid-state gain spectrum, therefore exhibiting different amplification in the solid-state amplifier, where one must have a higher gain than primary pulses and the other must have a lower gain than primary pulses in the solid-state amplifier.

For separation of primary and idler pulses a separator based on polarization separation (in the case of different polarizations of idler and primary pulses), on frequency conversion of light (in the case of different time durations of primary and idler pulses) or on combination of both methods. The preferred embodiment of the invention is based on a second harmonic generation (SHG) that doubles the frequency of the laser pulses coming from the compressor.

The hybrid laser according to the invention is further equipped with appropriate elements (e.g. acousto-optic modulator or electro-optic modulator) and associated control electronics, that allow changing the repetition frequency of the primary pulses, and control electronics, that allow control over the source of the idler pulses in such a way, that it can generate idler pulses with arbitrary repetition frequency.

The hybrid laser according to the invention allows for the formation of primary pulses, which all have the same energy, which further means that a specific laser pulse is generated at the desired moment with the desired characteristics, which are relevant for different laser applications with either resonant or polygonal scanning systems. The temperature control of the source of idler pulses is easy to perform and to control, which makes the resulting system compact, reliable and without unnecessary structural complications.

A different embodiment of a laser is also possible with a larger number of amplifiers of different types, which have different gain spectra, whereby the constant energy of the desired pulses is achieved in the same way as above by adjusting the wavelength of the idler laser pulses. Such a laser would include at least two sources of idler pulses, but the rationality of such a laser is questionable, and is therefore not a preferred embodiment.

The hybrid laser for generating pulses on demand with constant energy according to the invention, its operation and method of generation of said pulses will be described in further detail based on exemplary embodiments and figures, which show:

Figure 1    Amplification of laser pulses in a fibre amplifier with a broad gain spectrum

Figure 2    Amplification of laser pulses in a solid-state amplifier with a narrow gain spectrum

Figure 3    The dependence of idler pulse wavelength on the temperature of the source of idler pulses

Figure 4    Amplification of laser pulses in a solid-state amplifier with wavelength adjustment of idler pulses from a single idler pulse source

Figure 5    Amplification of laser pulses in a solid-state amplifier with wavelength adjustment of idler pulses from two idler pulse sources

Figure 6    A schematic of the hybrid laser for generating ultra-short laser pulses on demand

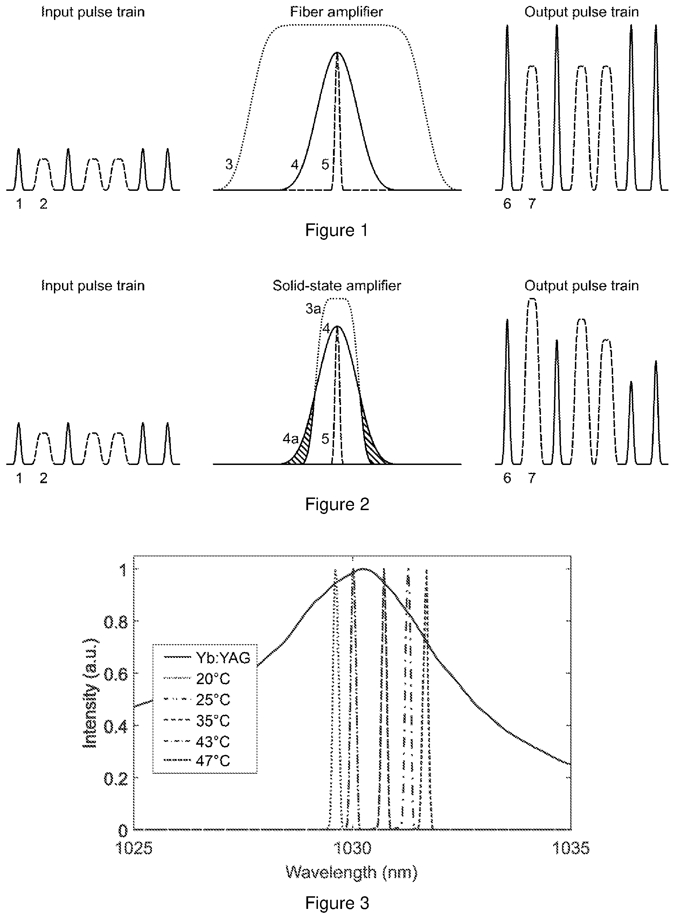

The spectrum of laser pulses and amplification of these pulses in a fibre amplifier with a broad gain spectrum are shown in Figure 1. On the left side there are primary pulses (1) and idler pulses (2) at the input of the fibre amplifier, both with the same energy. On the right side there are amplified primary pulses (6) and idler pulses (7) at the output of the fibre amplifier. Since the fibre amplifier has a broad gain spectrum (3), which completely overlaps with both the spectrum (4) of primary pulses (1) and also the spectrum (5) of the idler pulses (2), the amplification of both primary and idler pulses is the same in this amplifier.

The spectrum of laser pulses and amplification of these pulses in a solid-state amplifier with a narrow gain spectrum are shown in Figure 2. On the left side there are primary pulses (1) and idler pulses (2) at the input of the solid-state amplifier, both with the same energy. On the right side there are amplified primary pulses (6) and idler pulses (7) at the output of the solid-state amplifier, where a variation in the amplitudes and therefore energies of the laser pulses is evident (6). Since the solid-state amplifier has a narrow gain spectrum (3a), it completely overlaps with the whole spectrum (5) of idler pulses (2), however only partially overlaps with the spectrum (4) of the primary pulses (1) (a part of spectrum 4a falls outside of the gain spectrum of the solid-state amplifier), which consequently means, that the amplification of primary and idler pulses is not the same in the solid-state amplifier.

Figure 3 shows the dependence of the idler pulse spectrum on the temperature of the idler pulse source, where the maximum of the spectrum at 20 °C is around 1028,7 nm, and moves towards 1032 nm with increasing temperature up to 47 °C.

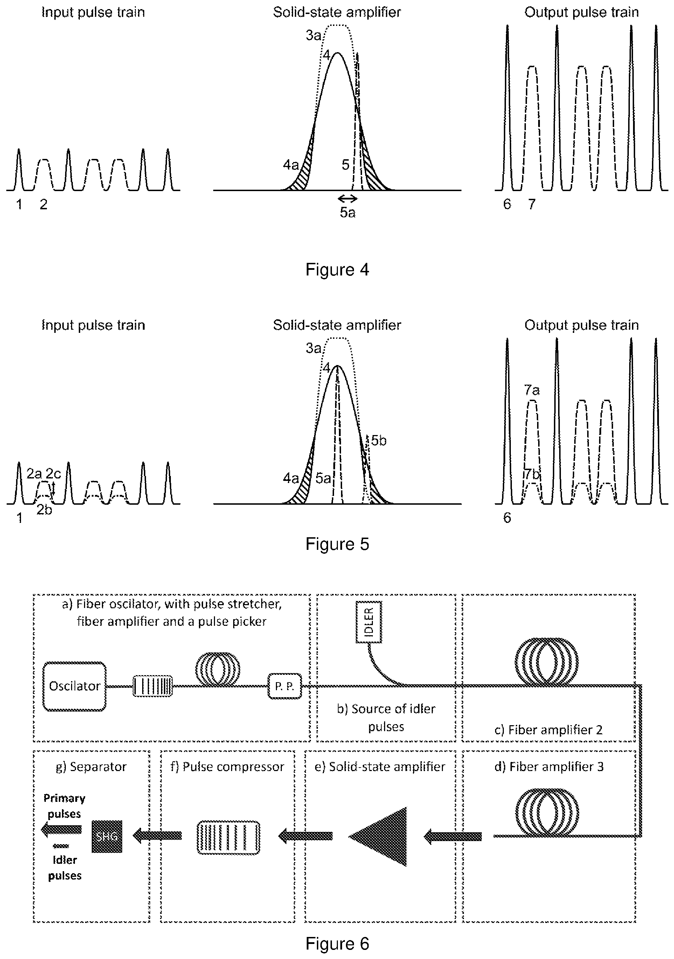

Figure 4 shows amplification in a solid-state amplifier, which is a part of a hybrid laser and where only one source of the idler pulses is used. The hybrid laser according to the embodiment I, which is not part of the claimed invention, therefore consists of:

- a source of primary laser pulses with corresponding pulse picker and a pulse stretcher,
- one additional source for the generation of idler pulses the wavelength of which can be modified by changing the temperature of the source, the source temperature being between 10 and 50 °C, preferably between 40 and 45 °C, and the said source being preferably a 1030 nm DFB laser diode,
- ytterbium doped fibre amplifier,
- Yb:YAG solid-state amplifier,
- pulse compressor,
- pulse separator for separation of primary (desired) and idler pulses, and
- control electronics for switching between primary and idler pulses, for control of the pulse picker, and for the control of the source of the idler pulses.

By adjusting (5a) of the wavelength of the idler pulses (5) as shown in Figure 4, the uniformity of the outgoing primary pulses is achieved.

The desired adjustment of the wavelength of the idler pulses is possible with advance knowledge or measurement of the gain spectrum of the solid-state amplifier and the spectrum of primary laser pulses, in which case the desired wavelength of the idler pulses can be calculated in advance. The calculation of the desired wavelength of idler pulses is based on Frantz-Nodvik equations [1] describing the amplification of light in laser amplifiers and which can be written as

$$E_{out} = \frac{E_s}{2} \ln \left( 1 - g_{in} \left( 1 - \exp\left[ 2E_{in} / E_s \right] \right) \right)$$

$$\Delta_{out} = \frac{1}{\sigma L} \ln \left( \frac{\exp\left[ 2E_{in} / E_s \right]}{\exp\left[ 2E_{in} / E_s \right] + 1/g_{in} - 1} \right) \, , \tag{1}$$

where $E_{out}$ is the energy of the laser pulses at the output of the amplifier, $E_s$ is the saturation energy of the amplifier, $E_{in}$ is the input energy of the pulses, $\Delta_{out}$ is the population inversion in the amplifier, directly after the individual pulse leaves the amplifier, $\sigma$ is the stimulated emission cross section of the amplifier and L is the length of the amplifier. Small signal gain $g_{in}$, in the moment when a laser pulse enters the amplifier can be described as $g_{in} = \exp(\text{oLL}_{in})$, where $\Delta_{in}$ is the population inversion of the amplifier at the time the pulse enters the amplifier.

Since the durations between laser pulses in pulse on demand operation can be larger than typical time scales of the processes related to pumping of the amplifier, the pumping must be taken into account when modelling the laser operation in pulse on demand regime. Optical pumping influences the inversion population of the amplifier and can be described whit equation

$$\Delta(t) = \Delta_{out} \exp(-At) + \frac{B}{A}(1 - \exp(-At)) \, , \tag{2}$$

where $\Delta$ is a time dependant inversion population of the amplifier after the laser pulse leaves the amplifier. Parameters A and B are introduced as $A = 2\sigma_p c n_p - 1/\tau$ and $B = \sigma_p c n_p N$, where $\sigma_p$ is the absorption cross section for the pump laser light and $n_p$ is the number density of the pump photons. $\tau$ is the upper state lifetime of the amplifier media and N is the number density of the active ions in the amplifier media. Pumping of the amplifier can be neglected during the time in which the laser pulse is in the amplifier.

By transforming equations (1) we can get the condition for the appropriate wavelength of the idler pulses through the numerical solution of the equation

$$\sigma_I = \frac{1}{L\Delta} \ln \left[ \frac{1 - \exp\left( \frac{2\sigma_I E_{out}}{\hbar \omega_0} \right)}{1 - \exp\left( \frac{2\sigma_I E_{in}}{\hbar \omega_0} \right)} \right] \, , \tag{3}$$

where $\sigma_I$ is the effective stimulated emission cross section of the idler pulses in the solid-state amplifier, L is the length of the amplifier, $\Delta$ is the population inversion of the amplifier, $E_{out}$ is the energy of the laser pulses at the output of the amplifier, $E_{in}$ is the energy of the laser pulses at the input of the amplifier, $\hbar$ is the reduced Planck constant and $\omega_0$ is the central frequency of the laser pulses. The effective cross section for stimulated emission of idler pulses is defined as

$$\sigma_I = \sigma_0 \int S(\lambda) \delta(\lambda_I) d\lambda \, , \tag{4}$$

where $S(\lambda)$ is the gain spectrum of the solid-state amplifier and $\sigma_0$ is the stimulated emission cross section at the wavelength that corresponds to the maximum of the gain spectrum of the solid-state amplifier. With the calculated value for $\sigma_I$, that we get from equation (3), we can further calculate the desired wavelength of the idler pulses through equation (4). The output laser pulse energy $E_{out}$ can be determined experimentally or we can calculate it by solving Frantz-Nodvik equations (1) for the primary laser pulses.

Figure 5 shows amplification in a solid-state amplifier, which is a part of a hybrid laser and where two sources of the idler pulses are used. The hybrid laser according to the embodiment II, which is an embodiment of the claimed invention, therefore consists of:

- a source of primary laser pulses with corresponding pulse picker and a pulse stretcher,
- two additional sources for generation of idler pulses, where one has a wavelength close to the maximum of the gain spectrum of the solid-state amplifier, and the wavelength of the second idler source is sufficiently shifted so that the gain in the solid-state amplifier for the second idler source is significantly lower than for the first idler source and both of these sources are preferably 1030 nm DFB laser diodes,
- ytterbium doped fibre amplifier,
- Yb:YAG solid-state amplifier,
- pulse compressor,
- pulse separator for separation of primary (desired) and idler pulses, and
- control electronics for switching between primary and idler pulses, for control of the pulse picker, and for control of the amplitudes of the laser pulses from both idler sources.

In this variant, the emphasis is not on the exact adjustment of a specific (optimal) wavelength, as in case I. The important thing in this case is that the wavelength of one idler source is sufficiently shifted away from the wavelength of the other idler source, so that it falls somewhere on the edge or even outside of the solid-state amplifier gain spectrum. By adjusting the amplitude of the two idler sources, the same effect is then achieved as in embodiment I.

On the left side of the Figure 5 primary pulses (1) and first idler pulses (2a) and second idler pulses (2b) can be seen, where the sum of the energies of first and second idler pulses equals to the energy of the primary pulses (1). On the right side amplified primary (6) and idler (7a, 7b) pulses are shown. The wavelength of the first idler pulses (5a) is in the proximity of the maximum of the solid-state gain (3a), whereas the wavelength of the second idler pulses (5b) is sufficiently shifted, so that the amplification of the second idler pulses in the solid-state amplifier is significantly lower than the amplification of the first idler pulses. With appropriate difference in the amplitudes (2c) between first (2a) and second (2b) idler pulses, a uniformity of the output primary pulses is achieved (6), where the energy of the primary pulses (6) equals the sum of the energies of the first (7a) and second (7b) idler pulses.

Figure 6 shows embodiment III of the hybrid laser system which is useful for understanding the invention, where the laser system comprises:

- front-end module (a), which comprises a fibre oscillator, that generates picosecond laser pulses with 30 MHz pulse repetition frequency, a pulse stretcher, and a fibre amplifier and a pulse picker;
- two additional fibre amplifiers (c) and (d) and an Yb:YAG solid-state amplifier (e);
- pulse compressor (f);
- a source of idler pulses (b) with 32 ns duration, that is situated after the front-end module (a), where the idler pulses can replace the desired primary pulses from module (a);
- control electronics for controlling the pulse picker, the source of the idler pulses and for generating the desired sequences of primary pulses; and
- a SHG separator, that is a 2 mm long LBO (lithium triborate) crystal at 55 °C, to filter out the long idler laser pulses from the short primary laser pulses that are consequently the output pulses (g) from the hybrid laser.

The scope of the invention as described herein is defined in the claims.

References:

1. L. M. Frantz and J. S. Nodvik, "Theory of Pulse Propagation in a Laser Amplifier," J. Appl. Phys. 34(8), 2346-2349 (1963).

**Claims**

1. A hybrid laser for generating pulses on demand with constant energy, which comprises :

   - at least one source of primary pulses (1) with broad spectrum,
   - at least one source of idler pulses (2),
   - an amplifier comprising cascaded stages of at least two laser pulse amplifiers with different gain spectra, including a solid-state amplifier and a fiber amplifier, said primary and idler pulses (1, 2) having the same gain in all amplification stages, and
   - a pulse separator for separation of primary and idler pulses (1, 2), wherein idler pulses (2) are arranged to be separated from primary pulses (1) at an output of the amplifier,

wherein the wavelength of the idler pulses (2) is adjusted so as to ensure stabilization of amplification and thus constant energy of the primary pulses (1),

**characterized in that**

the hybrid laser has at least two sources of idler pulses (2) and where one of them has a higher gain in the solid-state amplifier than primary pulses (1), and where the other has a lower gain in the solid-state amplifier than primary pulses (1), and where wavelength adjustment is made so that one source has a wavelength that corresponds approximately to the maximum of the solid-state gain, whereas the other has a wavelength that is either on the edge or falls outside of the gain of the solid-state amplifier, but is still within the gain of the fibre amplifier, and whereby the

- the sum of the energies of both idler pulses (2) is constant and is equal to the energy of the primary pulse, and
- the amplitude of the idler pulses (2) is adjusted, in order to ensure appropriate amplification in the solid-state amplifier, so that the sum of the energies of both amplified idler pulses (2) is constant and equal to the energy of the amplified primary pulse.

2. The hybrid laser according to claim 1, wherein one of the sources of idler pulses (2) is either a fibre or a solid-state laser and where the desired adjustment of the wavelength of idler pulses (2) is ensured with the use of appropriate adjustable band pass filters in a laser resonator or with the use of appropriate adjustable reflective elements in a laser resonator such as diffraction gratings or Bragg gratings.

3. The hybrid laser according to claim 1, wherein one of the sources of the idler pulses (2) is a laser diode and where the desired adjustment of the wavelength of idler pulses (2) is ensured with the adjustment of the laser diode temperature.

4. The hybrid laser according to claim 1, wherein one of the sources of the idler pulses (2) is a laser diode and where the desired adjustment of the wavelength of idler pulses (2) is ensured with the use of an appropriate fibre Bragg grating, which enables stabilization of the laser diode wavelength.

5. The hybrid laser according to claim 3, wherein the adjustment of the temperature of the laser diode is achieved with appropriate control of built-in thermoelectric elements, where the temperature is adjusted in the range between 10 to 50 °C with adjustment of the current on a thermoelectric element.

6. The hybrid laser according to any of the preceding claims, comprising at least:

- the source of primary laser pulses (1) with broad spectrum broader than 2 nm,
- at least one element, such as a pulse picker, which allows the repetition frequency of the primary pulses to be changed,
- the at least two sources for generating idler pulses (2), the wavelength of which can be adjusted in a range of a few nanometres, typically from 0,5 nm to 5 nm,
- at least one element for combining primary and idler pulses,
- at least one fibre amplifier and at least one solid-state amplifier having different gain spectra,
- a pulse compressor, and
- control electronics for switching between primary and idler pulses.

7. The hybrid laser according to any of the preceding claims, wherein the source of the primary pulses (1) is a laser oscillator, which uses either q-switching, gain switching or mode-locking technique for generation of laser pulses, preferably a mode-locked laser oscillator, that generates laser pulses with duration less than 10 ps with repetition frequency above 1 MHz.

8. The hybrid laser according to claim 6, wherein the element is a pulse picker that is an acousto-optic modulator, an electro-optic modulator, or a semiconductor optical amplifier, preferably an acousto-optic modulator with a response time shorter than 100 ns.

9. The hybrid laser according to any of claims 6 to 8, wherein the fibre amplifiers are made up of optical fibres doped with ytterbium, but other dopants known in the field may also be used, where the laser may consist of one or more fibre amplifiers, where the exact location of the pulse picker and the pulse combiner can be arbitrary as long as at least one fibre amplifier and at least one solid-state amplifier remain after the pulse combiner.

10. The hybrid laser according to any of claims 6 to 9, wherein the solid-state amplifier is a doped crystal or doped glass, in which laser pulses are not guided by an amplifier, preferably ytterbium doped YAG crystal.

11. The hybrid laser according to any of the preceding claims, comprising an additional pulse stretcher in front of the amplifiers and a pulse compressor at the output of the last amplifier.

12. The hybrid laser according to any of the preceding claims, wherein the number of idler is two or more, where the sources are configured to allow for adjusting the wavelength and amplitude of the idler pulses, where a preferred source of idler pulses is a DFB laser diode.

13. The hybrid laser according to any of the preceding claims, wherein the pulse separator is based on polarization separation, on second harmonic generation or on a combination of both techniques, where a separator is preferably based on second harmonic generation.

**Patentansprüche**

1. Hybrider Laser zur Erzeugung von bedarfsgesteuerten Impulsen mit konstanter Energie, der Folgendes umfasst:

   - mindestens eine Quelle von Primärimpulsen (1) mit breitem Spektrum,
   - mindestens eine Quelle von Leerlaufimpulsen (2),
   - einen Verstärker, der kaskadierte Stufen davon umfasst,
   mindestens zwei Laserimpulsverstärker mit unterschiedlichen Verstärkungsspektren, einschließlich eines Festkörperverstärkers und eines Faserverstärkers, wobei die Primär- und Leerlaufimpulse (1, 2) in allen Verstärkungsstufen die gleiche Verstärkung aufweisen, und einen Pulsseparator zur Trennung der Primär- und Leerlaufimpulse (1, 2), wobei die Leerlaufimpulse (2) an einem Ausgang des Verstärkers von Primärimpulsen (1) getrennt angeordnet werden, wobei die Wellenlänge der Leerlaufimpulse (2) so angepasst wird, dass eine Stabilisierung der Verstärkung und somit konstante Energie der Primärimpulse (1) gewährleistet ist, **dadurch gekennzeichnet, dass** der hybrid Laser mindestens zwei Quellen für Leerlaufimpulse (2) aufweist und von denen eine von ihnen eine höhere Verstärkung im Festkörperverstärker als die Primärimpulse (1) und die andere eine niedrigere Verstärkung im Festkörperverstärker als die Primärimpulse (1) aufweist, und wobei die Wellenlängenanpassung so erfolgt, dass eine Quelle eine Wellenlänge aufweist, die ungefähr dem Maximum der Festkörperverstärkung entspricht, während die andere eine Wellenlänge aufweist, die entweder am Rand oder außerhalb der Verstärkung des Festkörperverstärkers liegt, aber dennoch innerhalb der Verstärkung des Faserverstärkers, und wobei
   - die Summe der Energien beider Leerlaufimpulse (2) konstant ist und der Energie des Primärimpulses entspricht und
   - die Amplitude der Leerlaufimpulse (2) angepasst wird, um eine geeignete Verstärkung im Festkörperverstärker zu gewährleisten, sodass die Summe der Energien beider verstärkter Leerlaufimpulse (2) konstant ist und gleich der Energie des verstärkten Primärimpulses ist.

2. Der hybride Laser nach Anspruch 1, wobei eine der Quellen von Leerlaufimpulsen (2) entweder ein Faser- oder ein Festkörperlaser ist und wobei die gewünschte Anpassung der Wellenlänge der Leerlaufimpulse (2) durch Verwendung geeigneter einstellbarer Bandpassfilter in einem Laserresonator oder durch Verwendung geeigneter einstellbarer reflektierender Elemente in einem Laserresonator, wie Beugungsgitter oder Bragg-Gitter, gewährleistet wird.

3. Der hybride Laser nach Anspruch 1, wobei eine der Quellen der Leerlaufimpulse (2) eine Laserdiode ist und die gewünschte Anpassung der Wellenlänge der Leerlaufimpulse (2) durch die Einstellung der Temperatur der Laserdiode gewährleistet wird.

4. Der hybride Laser nach Anspruch 1, wobei eine der Quellen der Leerlaufimpulse (2) eine Laserdiode ist und die gewünschte Anpassung der Wellenlänge der Leerlaufimpulse (2) durch die Verwendung eines geeigneten Bragg-Fasergitters gewährleistet wird, das die Stabilisierung der Wellenlänge der Laserdiode ermöglicht.

5. Der hybride Laser nach Anspruch 3, wobei die Einstellung der Temperatur der Laserdiode durch geeignete Steuerung eingebauter thermoelektrischer Elemente erreicht wird, wobei die Temperatur im Bereich zwischen 10 und 50 °C durch Anpassung des Stroms an einem thermoelektrischen Element eingestellt wird.

**6.** Der hybride Laser nach einem der vorstehenden Ansprüche, der mindestens Folgendes umfasst:

- die Quelle primärer Laserimpulse (1) mit einem breiten Spektrum von mehr als 2 nm,
- mindestens ein Element, wie einen Pulswähler, das die Änderung der Wiederholfrequenz der Primärimpulse ermöglicht,
- mindestens zwei Quellen zum Erzeugen von Leerlaufimpulsen (2), deren Wellenlänge in einem Bereich von wenigen Nanometern, üblicherweise von 0,5 nm bis 5 nm, anpassbar ist,
- mindestens ein Element zum Kombinieren von Primär- und Leerlaufimpulsen,
- mindestens einen Faserverstärker und mindestens einen Festkörperverstärker mit unterschiedlichen Verstärkungsspektren,
- einen Impulskompressor und
- Steuerelektronik zum Umschalten zwischen Primär- und Leerlaufimpulsen.

**7.** Der hybride Laser nach einem der vorstehenden Ansprüche, wobei die Quelle der Primärimpulse (1) ein Laseroszillator ist, der entweder die Q-Switching-, Gain-Switching- oder Mode-Locking-Technik zum Erzeugen von Laserimpulsen verwendet, vorzugsweise einen Mode-Locked-Laseroszillator, der Laserimpulse mit einer Dauer von weniger als 10 ps und einer Wiederholfrequenz von über 1 MHz erzeugt.

**8.** Der hybride Laser nach Anspruch 6, wobei es sich bei dem Element um einen Impulswähler handelt, der ein akustooptischer Modulator, ein elektrooptischer Modulator oder ein Halbleiter-Lichtwellenleiterverstärker ist, vorzugsweise ein akustooptischer Modulator mit einer Reaktionszeit von weniger als 100 ns.

**9.** Der hybride Laser nach einem der vorstehenden Ansprüche 6 bis 8, wobei die Faserverstärker aus mit Ytterbium dotierten optischen Fasern bestehen, aber auch andere auf diesem Gebiet bekannte Dotierstoffe verwendet werden können, wobei der Laser aus einem oder mehreren Faserverstärkern bestehen kann, wobei die genaue Position des Impulswählers und des Impulskombinierers beliebig sein kann, solange nach dem Impulskombinierer mindestens ein Faserverstärker und mindestens ein Festkörperverstärker verbleiben.

**10.** Der hybride Laser nach einem der vorstehenden Ansprüche 6 bis 9, wobei der Festkörperverstärker ein dotierter Kristall oder ein dotiertes Glas ist, in dem Laserimpulse nicht durch einen Verstärker geführt werden, vorzugsweise ein mit Ytterbium dotierter YAG-Kristall.

**11.** Der hybride Laser nach einem der vorstehenden Ansprüche, umfassend einen zusätzlichen Impulsstrecker vor den Verstärkern und einen Impulskompressor am Ausgang des letzten Verstärkers.

**12.** Der hybride Laser nach einem der vorstehenden Ansprüche, wobei die Anzahl der Leerlaufimpulse zwei oder mehr beträgt, wobei die Quellen konfiguriert sind, um die Wellenlänge und Amplitude der Leerlaufimpulse anpassen zu können, wobei eine bevorzugte Quelle für die Leerlaufimpulse eine DFB-Laserdiode ist.

**13.** Der hybride Laser nach einem der vorstehenden Ansprüche, wobei der Impulsseparator auf Polarisationstrennung, auf Frequenzverdopplung oder auf einer Kombination beider Techniken basiert, wobei der Separator vorzugsweise auf Frequenzverdopplung basiert.

**Revendications**

**1.** Laser hybride pour générer des impulsions laser sur commande avec une énergie constante, qui comprend :

- au moins une source d'impulsions primaires (1) à spectre large,
- au moins une source d'impulsions idler (2),
- un amplificateur comprenant des étapes en cascade de,
au moins deux amplificateurs d'impulsions laser ayant des spectres de gain différents, y compris un amplificateur à semi-conducteurs et un amplificateur à fibre, lesdites impulsions primaires et idler (1, 2) ayant le même gain à tous les stades de l'amplification, et un séparateur d'impulsions pour la séparation des impulsions primaires et idler (1, 2), où les impulsions idler (2) sont conçues pour être séparées des impulsions primaires (1) à une sortie de l'amplificateur, la longueur d'onde des impulsions idler (2) étant ajustée de façon à garantir la stabilisation de l'amplification et ainsi l'énergie constante des impulsions primaires (1), **caractérisé par le fait que** le laser hybride a au moins deux sources d'impulsions idler (2), et où l'une d'elles a un gain plus élevé dans l'amplificateur à semi-conducteurs que les impulsions primaires (1), et où l'autre a un gain plus bas dans l'amplificateur à semi-conducteurs que les impulsions primaires (1), et où l'ajustement de la longueur d'onde est effectué de façon à ce qu'une source ait une longueur d'onde qui corresponde approximativement au maximum du gain à semi-conducteurs, tandis que l'autre a une longueur d'onde qui est soit à la limite, soit au-delà du gain de l'amplificateur à semi-conducteurs, mais est toujours dans les limites du gain de l'amplificateur à fibre, et il s'ensuit que

- la somme des énergies des deux impulsions idler (2) est constante et est égale à l'énergie de l'impulsion primaire, et

- l'amplitude des impulsions idler (2) est ajustée, afin de s'assurer de l'amplification adéquate de l'amplificateur à semi-conducteurs, de façon à ce que la somme des énergies des deux impulsions idler amplifiées (2) soit constante et égale à l'énergie de l'impulsion primaire amplifiée.

2. Laser hybride selon la revendication 1, dans lequel l'une des sources d'impulsions idler (2) est soit un laser à fibre, soit un laser à semi-conducteurs, où l'ajustement désiré de la longueur d'onde des impulsions idler (2) est assuré par l'utilisation de filtres passe-bande ajustables appropriés dans un résonateur optique ou par l'utilisation d'éléments réflecteurs ajustables appropriés dans un résonateur optique, tels que des réseaux de diffraction ou des réseaux de Bragg.

3. Laser hybride selon la revendication 1, dans lequel une des sources d'impulsions idler (2) est une diode laser, où l'ajustement désiré de la longueur d'onde des impulsions idler (2) est assuré par l'ajustement de la température de la diode laser.

4. Laser hybride selon la revendication 1, dans lequel une des sources d'impulsions idler (2) est une diode laser, où l'ajustement désiré de la longueur d'onde des impulsions idler (2) est assuré par l'utilisation d'un réseau de Bragg à fibre approprié, qui permet la stabilisation de la longueur d'onde de la diode laser.

5. Laser hybride selon la revendication 3, dans lequel l'ajustement de la température de la diode laser est effectué par le contrôle approprié d'éléments thermoélectriques intégrés, où la température est ajustée sur une plage comprise entre 10 et 50 °C grâce à l'ajustement du courant d'un élément thermoélectrique.

6. Laser hybride selon l'une quelconque des revendications précédentes, comprenant au moins :

   - la source d'impulsions laser primaires (1) à spectre large, supérieur à 2 nm,
   - au moins un élément, tel qu'un sélecteur d'impulsions, qui permette de modifier la fréquence de répétition des impulsions primaires,
   - les deux sources minimales pour la génération d'impulsions idler (2), dont la longueur d'onde peut être ajustée sur une plage de quelques nanomètres, idéalement de 0,5 nm à 5 nm,
   - au moins un élément destiné à combiner les impulsions primaires et idler,
   - au moins un amplificateur à fibre et au moins un amplificateur à semi-conducteurs ayant des spectres de gain différents,
   - un compresseur d'impulsions, et
   - un dispositif électronique de commande pour passer des impulsions primaires aux impulsions idler et vice-versa.

7. Laser hybride selon l'une quelconque des revendications précédentes, dans lequel la source des impulsions primaires (1) est un oscillateur optique, qui utilise soit la commutation-Q, soit la commutation de gain, soit une technique de verrouillage de mode pour la génération d'impulsions laser, de préférence un oscillateur optique à mode verrouillé, qui génère des impulsions laser ayant une durée inférieure à 10 ps et une fréquence de répétition supérieure à 1 MHz.

8. Laser hybride selon la revendication 6, dans lequel l'élément est un sélecteur d'impulsions qui est un modulateur acousto-optique, un modulateur électro-optique, ou un amplificateur optique à semi-conducteurs, de préférence un modulateur acousto-optique ayant un temps de réponse inférieur à 100 ns.

9. Laser hybride selon l'une quelconque des revendications 6 à 8, dans lequel les amplificateurs à fibre sont composés de fibres optiques dopées à l'ytterbium, mais d'autres dopants connus dans ce domaine peuvent aussi être utilisés, où le laser peut être constitué d'un ou de plusieurs amplificateurs à fibre, et où l'emplacement exact du sélecteur d'impulsion et du combinateur d'impulsions peut être arbitraire du moment qu'au moins un amplificateur à fibre et au moins un amplificateur à semi-conducteurs restent après le combinateur d'impulsions.

**10.** Laser hybride selon l'une des revendications 6 à 9, dans lequel l'amplificateur à semi-conducteurs est composé de cristal dopé ou de verre dopé, dans lequel les impulsions laser ne sont pas guidées par un amplificateur, de préférence du cristal YAG dopé à l'ytterbium.

**11.** Laser hybride selon l'une quelconque des revendications précédentes, comprenant un élargisseur d'impulsions supplémentaire en amont des amplificateurs et un compresseur d'impulsions à la sortie du dernier amplificateur.

**12.** Laser hybride selon l'une quelconque des revendications précédentes, dans lequel le nombre d'idler est de deux ou plus, où les sources sont configurées pour permettre l'ajustement de la longueur d'onde et l'amplitude des impulsions idler, et où une source privilégiée d'impulsions idler est une diode laser DFB.

**13.** Laser hybride selon l'une quelconque des revendications précédentes, dans lequel le séparateur d'impulsions est basé sur la séparation par polarisation, sur la génération de seconde harmonique ou sur une combinaison des deux techniques, où un séparateur est de préférence basé sur la génération de seconde harmonique.

Input pulse train      Fiber amplifier      Output pulse train

Figure 1

Input pulse train      Solid-state amplifier      Output pulse train

Figure 2

Figure 3

Figure 4

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3590160 A
- US 8149886 B
- US 8717670 B
- DE 102014017568
- US 9570877 B
- DE 102017210272
- US 7885298 B
- US 2018309258 A1

**Non-patent literature cited in the description**

- **L. M. FRANTZ** ; **J. S. NODVIK**. Theory of Pulse Propagation in a Laser Amplifier. *J. Appl. Phys.*, 1963, vol. 34 (8), 2346-2349